# EUROPEAN PATENT SPECIFICATION

(11) **EP 4 478 232 B1**
(45) Date of publication and mention of the grant of the patent: **13.05.2026**
(21) Application number: 23179634.3
(22) Date of filing: 15.06.2023
(51) Int. Cl.: G06F 21/62, B33Y 50/00

(54) **APPARATUS AND METHOD FOR RESTRICTING 3D PRINTING**
VORRICHTUNG UND VERFAHREN ZUR EINSCHRÄNKUNG VON 3D-DRUCKEN
APPAREIL ET PROCÉDÉ DE RESTRICTION D'IMPRESSION 3D

(43) Date of publication of application: 18.12.2024
(73) Proprietor: Fraunhofer-Gesellschaft zur Förderung der angewandten Forschung e.V., 80686 München (DE)
(72) Inventor: SOLASS, Johannes, 79588 Efringen-Kirchen (DE); HOSCHKE, Klaus, 79104 Freiburg (DE)
(74) Representative: 2SPL Patentanwälte PartG mbB

(56) References cited:
- WO-A1-2023/086137
- US-A1- 2014 058 959
- US-A1- 2022 011 743

## Description

### Field

The present disclosure relates to administering 3D printing. In particular, examples of the present disclosure relate to an apparatus and method for receiving a G-code file, classifying the 3D object represented by the G-code file, and restricting the 3D printing based on the classification.

### Background

US 2022/0011743 A1 describes systems and methods for 3D printer management that can allow or reject printing of an object based on a model that is trained with machine learning. The model can classify according to object type and can be compared against a list to determine whether to block the object from printing.

US 2014/0058959 A1 describes systems and methods of enforcing 3D restricted rights in rapid manufacturing and prototyping environments, which may include, in response to receiving a 3D object data representative of a 3D object, performing at least one function on the 3D object data to determine a parameter set for each respective function. At least one algorithm may be performed to determine whether at least a portion of the 3D object matches a rights-restricted 3D object.

WO 2023/086137A1 describes an adaptive AI model for 3D object detection using synthetic training data. The ML model may be trained to detect certain items of interest based on a training set that is synthetically generated in real time during the training process.

Recent incidents have shown that there is an increasing threat from self-manufactured or printed firearms, particularly in nations with restrictive gun laws. Furthermore, it is known that 3D printers enable the production of unregistered weapons and weapon parts. Such weapons, also known as "ghost guns", cannot be assigned to an owner when they are found, which poses enormous challenges in fighting crime. In addition, critical components of any kind could be produced in 3D printing (e.g. machine parts of centrifuges for uranium enrichment), the production of which is regulated and restricted. A printer manufacturer or manufacturer of the printing software could even be held liable. There is currently no widespread solution to address the problem described. This is especially the case for print files or 3D models that are created independently by a user. Since the spread of the plans on the Internet can hardly be prevented, solutions are urgently sought to counteract this threat.

Thus, there is a demand for restricting the use of 3D printers to printing only 3D objects that are not dangerous or illegal.

### Summary

This demand is met by an apparatus and method for administering 3D printing of 3D objects. Advantageous embodiments are addressed by the dependent claims.

According to a first aspect, the present disclosure proposes an apparatus. The apparatus comprises interface circuitry configured to receive a G-code file comprising instructions for 3D printing of one or more 3D objects. The apparatus further comprises processing circuitry configured to classify a 3D object represented by the G-code file, and restrict 3D printing of the 3D object if the 3D object is classified as at least a part of a dangerous/illegal object.

According to a second aspect, the present disclosure proposes a method. The method comprises receiving a G-code file comprising instructions for 3D printing of one or more 3D objects. The method further comprises classifying a 3D object represented by the G-code file, and restricting 3D printing of the 3D object if the 3D object is classified as at least a part of a dangerous/illegal object.

### Brief description of the Figures

Some examples of apparatuses and/or methods will be described in the following by way of example only, and with reference to the accompanying figures, in which
- Fig. 1: schematically illustrates an exemplary apparatus for administering 3D printing of 3D objects;
- Fig. 2: depicts an exemplary G-code file and corresponding geometric features of an exemplary 3D object;
- Fig. 3: depicts exemplary G-code file lines used in calculations of vector lengths, vector angles, and a displaced filament mass associated with the vectors;
- Fig. 4: depicts an exemplary 3D object and a corresponding graph of vector lengths obtained within a corresponding G-code file.
- Fig. 5: depicts another exemplary 3D object and a corresponding graph of vector lengths obtained within a corresponding G-code file;
- Fig. 6A: provides a histogram depicting a percentage of all vectors that are associated with a respective vector length;
- Fig. 6B: provides a histogram depicting a percentage of all vectors that are associated with a respective vector angle;
- Fig. 7: schematically illustrates a further exemplary apparatus for administering 3D printing of 3D objects using a machine learning network;
- Fig. 8: illustrates an exemplary neural network;
- Fig. 9: illustrates exemplary ground truth information provided to the machine learning network for training; and
- Fig. 10: illustrates a flowchart of an exemplary method for administering 3D printing of 3D objects.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

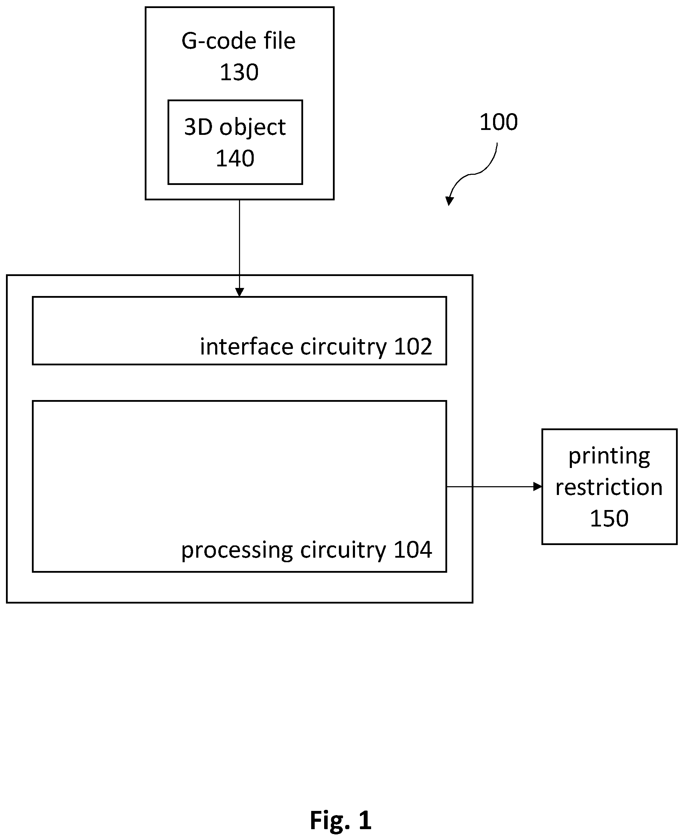

**Fig. 1** schematically illustrates an exemplary apparatus 100 for administering 3D printing of 3D objects. The apparatus 100 comprises interface circuitry 102 configured to receive a G-code file 130 comprising instructions for 3D printing of one or more 3D objects. The G-code file, commonly known as "geometric code", may contain a series of instructions for controlling movement and operation of a 3D printer. The instructions may be in the form of a sequence of commands, which may each be represented by a line of text. For example, a line may start with a letter, such as G, followed by specified numerical values for parameters. The instructions may correspond to geometric commands, which may control the movement of one or more tools of the 3D printer.

For example, a line of the G-code file may begin with G00, which may represent a move command for a part of the 3D printer to move without altering the object to be printed. A line may also begin with G01, which may represent a print command, a displace filament command, or a filament extrusion command for a part of the 3D printer. Such a command may refer to instructions for controlling a movement and/or extrusion of a filament in a 3D printer. The extrusion of the filament for the 3D printer may refer to a process of pushing (molten) filament material through the 3D printer's extruder nozzle so that it may be deposited layer by layer, which may ultimately enable creation of a physical 3D object. The filament may be melted by heat after a motor-driven gear pushes the filament into zone of a high enough temperature, at which point, it may be viscous and forced through the extruder nozzle. Specifically, the nozzle may be a part of the 3D printer that moves along a path according to the commands of the G-code file. The commands may include starting and stopping the extrusion, which may be at a location specified by coordinates. As such, the G-code file 130 may also include commands referring to coordinates, such as X, Y, and/or Z coordinates, each followed by corresponding numbers that may specify a distance in millimeters or another unit of length/distance. The commands may further include a command corresponding to the capital letter "E", which may specify extrusion of a length of filament to be specified by the following number, which may be in mm or another unit of length/distance. For example, the command G01 X102.500 Y87.139 E0.15272 may represent a command for extrusion for a filament length of 0.15272 mm, which may be specified to be done with the nozzle located at a certain point in a two-dimensional plane of the aforementioned depth by values corresponding to the values provided for X and Y in mm.

In general, each of the lines of the G-code file 130 may specify commands for moving, rearranging, or activating and disactivating tools to be used in the 3D printing. While being used, the commands may also manage specific settings, such as changing a location, orientation, or temperature of an object, among other settings, for controlling the 3D printing with greater precision. The commands, once performed, may lead to the formation of the 3D object 140 that is represented by the G-code file 130. Generally, the G-code file 130 comprises information that corresponds to spatial dimensions of the 3D object 140 to be printed by the 3D printer.

The G-code file 130 may be generated by a slicing software using a 3D model file. The slicing software may receive the 3D model file and convert it to a series of layer-by-layer instructions that is executable by the 3D printer. The slicing may be done according to various slicing parameters, such as layer height, print speed, infill density, and support structures, among other settings, each of which may affect the quality, strength, and appearance of the 3D object 140 after printing. The slicing software may analyze the surface geometry of the 3D model and slice it into a series of 2D layers based on a specified layer height. For each layer, the slicing software may generate a toolpath for instructing the 3D printer how to manipulate one or more tools during printing.

As such, the G-code file 130 may be derived from a 3D model using commercial or freely available slicing software. Generally, 3D models may be built, stored, and depicted using a stereolithography, STL, file with a ".stl" extension. It may also be referred to as a standard triangle language file or standard tessellation language file. In general, the STL file may store geometric information of a 3D model in the form of a collection of linked triangular facets, or flat surfaces. Each facet may comprise three vertices with specified coordinates and a surface normal vector for specifying the orientation of the triangle. The shape of a corresponding 3D model may be approximated by these facets. In such an approximation, the smoothness of the 3D model may depend on the number and size of the facets, with more facets corresponding to a larger file size.

STL files may be used for the creation of G-code files for their simplicity and compatibility across various software and hardware platforms. STL files may be used in either a binary or ASCII formats, with the ASCII format providing the same geometric information in a human-readable text format. Other file formats for 3D models may include a wavefront object file (.obj), additive manufacturing file format (.amf), 3D manufacturing format (.3mf), polygon file format (.ply), filmbox format (.fbx), standard for the exchange of product data (.stp or .step), initial graphics exchange specification (.igs or .iges), collaborative design activity (.dae), extensible 3D (.x3d), digital asset exchange (.dae), virtual reality modeling language (.wrl), object file format (.off), and a drawing exchange format (.dxf), among others. Any one of the file formats may be used by a slicing software to generate the G-code file 130.

For processing the G-code file 130, the apparatus 100 further comprises processing circuitry 104. For example, the processing circuitry 104 may be a single dedicated processor, a single shared processor, or a plurality of individual processors, some of which or all of which may be shared. Alternatively, the processing circuitry 104 may be a digital signal processor (DSP) hardware, an application specific integrated circuit (ASIC), a neuromorphic processor or a field programmable gate array (FPGA). The processing circuitry 104 may optionally be coupled to, e.g., read only memory (ROM) for storing software, random access memory (RAM) and/or non-volatile memory. Optionally, the apparatus 100 may comprise further circuitry. The processing circuitry is configured to classify a 3D object 140 represented by the G-code file 130 and restrict 3D printing of the 3D object 140 if the 3D object 140 is classified as at least a part of a dangerous or illegal object.

The 3D object 140 may be considered dangerous if it is determined to present a potential risk, hazard, or threat to the safety, well-being, or health of individuals or a surrounding environment. The 3D object 140 may also be considered dangerous if its use or its presence in a specific environment has the capacity to produce harm, injury, or damage to individuals or a surrounding environment. Such determination may be based on an assessment of a likelihood and severity of potential harm or negative outcomes.

The 3D object 140, if determined to be dangerous or illegal, may correspond to a specific type of dangerous or illegal object. A first example of a dangerous or illegal object type is a gun. Like conventionally manufactured guns, 3D printed guns comprise a plurality of separable parts or objects, each of which need to be 3D printed. While the individual parts do not form a gun when taken alone, it is understood that user may print one or more such objects with required dimensions to be able to construct the gun. As such, an object that may have a seemingly ordinary shape, such as a rod or cylinder, or a unique shape that is not perceivable to be dangerous or illegal, may indeed be classified as dangerous or illegal if it is known to be used to form a prototype of a 3D printable gun.

The same principle may apply to other dangerous or illegal object types. Other types may include further weapons, which may also comprise separable parts that may be 3D printed. Examples include knives of a certain shape, striking instruments, martial arts weapons, bow and arrow combinations, explosives or bombs of various types, grenades and grenade launchers, and missiles and missile launchers, among others. While 3D printing of weapons may be a more pressing concern, other object types that are dangerous or illegal are also possible in 3D printing. Other object types may also be classified as dangerous or illegal for 3D printing due to being generally considered as unsafe if not regulated. This may include everyday objects with a feature that requires regulation, such as appliances, furniture, construction tools, toys, etc.

If the 3D object 140 is classified as at least a part of a dangerous or illegal object, the processing circuitry 104 is configured to restrict 3D printing of the 3D object 140. For example, the interface circuitry 102 may be configured to receive the G-code file 130 with a request for printing the 3D object 140 represented by the G-code file 130. The apparatus may require the request to be made while logged into a user profile, which may be verified with identification. The apparatus 100 may thus keep track of all instances of printing associated with the user profile. The apparatus 100 may comprise a memory and may also send each instance of 3D printing to a central network, which may also comprise processing circuitry and a memory for maintaining information related to user profiles.

For each print request, the apparatus 100 may be configured to store a notification of the request, as well as a notification of each instance of 3D printing, if permitted. Alternatively or additionally, the notification of the request or instance of 3D printing may be sent to the central network and the user profile may be managed there. If a user associated with the user profile then provides a new request to the apparatus 100 at a later time, the user profile may be referenced to decide whether the request may be granted. For example, if a certain number of components for a weapon have previously been printed, a restriction may be set based on a threshold of a number of components of a known 3D printable weapon. Such restrictions may also be determined by a time scale of when previous 3D objects were 3D printed. For cases where the request is not granted, the apparatus 100 may block the printing of the 3D object 140 or print the 3D object 140 in a modified form, such as with altered dimensions. The restricting of 3D printing may be determined based on the laws of the jurisdiction under which the apparatus 100 is used. Such restrictions may also be customized for the apparatus 100 based on determination of safety.

As previously described, the G-code file 130 comprises information related to a path of a tool of a 3D printer. In order to recognize the 3D printing of parts of such objects, the processing circuitry 104 may be configured to classify the represented 3D object 140 of the G-code file 130 based on spatial dimensions corresponding to the path of the 3D printer tool. The 3D printer tool may be an extruder. The extruder may be configured to melt and deposit a filament material, such as plastic, onto a build platform or previous layers of a 3D object 140 that is being printed. The extruder may comprise a heater block, a nozzle, and a motor-driven filament feeder. The extruder may eject a material in a liquid or semi-liquid form. In some examples, the extruder may deposit a bonding agent used to solidify material, such as if the material is originally in powder form. Generally, the path may correspond to a tool that follows a path specified in the G-code file 130 to form the geometry of the 3D object 140.

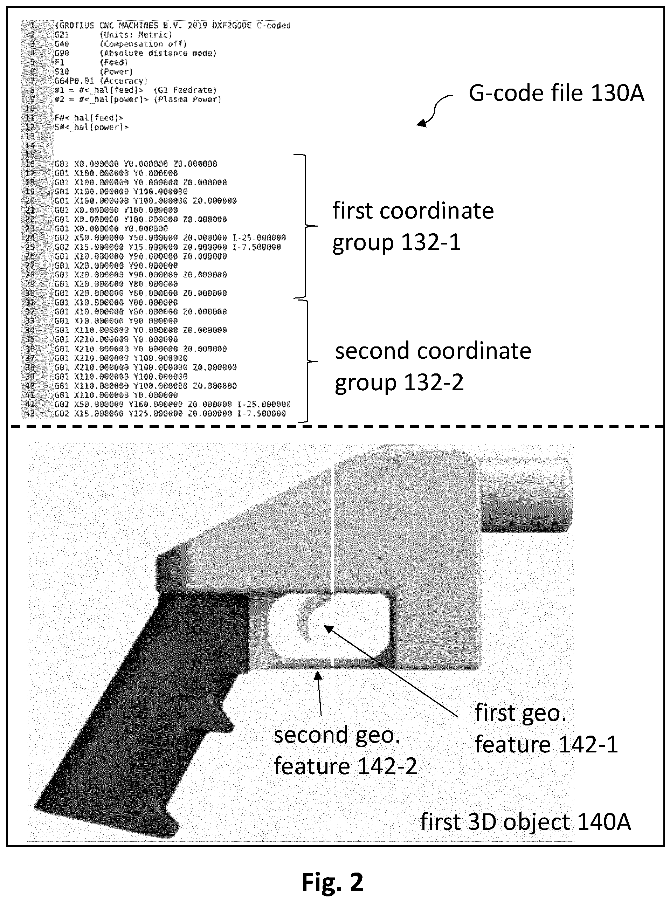

The path of the 3D printer tool specified in the G-code file 130 may comprise information that enables an identification of the 3D object 140, which may be known to be dangerous or illegal. This information may be in the form of coordinates for the 3D printer tool to follow the specified path. One or more groups of coordinates that provides a particular path for the 3D printer tool may correspond to a distinguishable geometric feature of the 3D object 140. This may especially be useful for recognizing well-known parts of a dangerous or illegal object that, if detected, give a high probability that such a geometric feature indeed corresponds to the suspected object. Related examples will be described in further detail with reference to Figs. 2 to 6.

**Fig. 2** depicts an exemplary G-code file 130A and a corresponding exemplary 3D object 140A. The G-code file 130A is depicted to comprise a first coordinate group 132-1, which corresponds to a first depicted geometric feature 142-1. Likewise, the G-code file 130A is depicted to comprise a second coordinate group 132-2 of the 3D object 140A, which corresponds to a second depicted geometric feature 142-2 of the 3D object 140A. As examples, the first geometric feature is depicted to be a trigger of a 3D printable gun, while the second geometric feature is depicted to be a trigger guard of the 3D printable gun, but examples may relate to any distinguishable geometric feature of any 3D printable object.

More specifically, the first group of coordinates 132-1 of the G-code file 130A comprises information of the spatial dimensions of the geometric feature 142-1 of the 3D object 140A. For the example of the trigger, the first geometric feature 142-1 is a distinguishable geometric feature that when taken in isolation, may also be a recognizable portion of a dangerous or illegal object, such as a gun. This may also be the case for the second geometric feature 142-2, such as with the example of the trigger guard.

Another particular example of a distinguishable geometric feature of a 3D printable gun is a barrel of the gun, or the cylindrical tube through which a bullet travels when the gun is discharged. Since barrel sizes for firearms are usually standardized to correspond with specific bullet calibers and barrels need to be a minimum to enable a firing mechanism, a diameter and length of the barrel of specific dimensions in distance units may be a geometric feature that may be more easily recognized to determine that the 3D object 140 is dangerous or illegal. The barrel of the gun provides an example how certain 3D objects may comprise more easily detectable distinguishable features. Further examples of geometric features of a gun that may comprise distinguishable geometric features may include a barrel, frame, receiver, slide, magazine, hammer, handle, cartridge, trigger, spring, connecting rod, and pin of a gun. While such features may vary in distinguishability, particularly concerning human perception, each part may be recognizable by means of one or more groups of coordinates in the G-code file 130.

Such spatial dimensions may be directly detectable within the G-code file 130 if the G-code file lines, particularly the coordinates, are mathematically and statistically analyzed. In particular, analyzing vector lengths may provide insight into spatial or volume dimensions, while analyzing vector angles or changes in vector direction from one line to the next may provide insight into curvature or structure. Such analyses, particularly when combined, may provide a means to reliably classify the 3D object 140 represented by the G-code file 130 as either safe and/or legal or as dangerous or illegal.

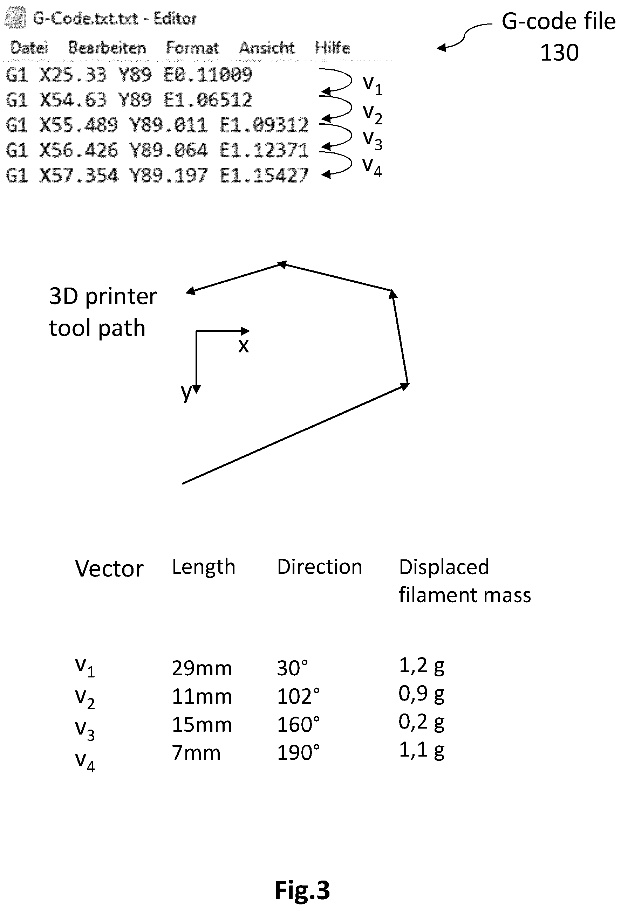

**Fig. 3** depicts five lines of an exemplary G-code file 130 and four vectors v₁ to v₄ corresponding to a specified path of a 3D printer tool. In general, the coordinates 132 within the G-code file 130 may be reformulated into a plurality of vectors. The length and direction of the vectors may then specify a path, which may correspond to a path of a 3D printer tool to follow, such as a nozzle of an extruder, among other examples. As such, the vectors may comprise geometric information that may correspond to a recognizable geometric feature 142 of the 3D object 140. Each of the four vectors may be obtained simply by taking the respective differences between a pair of x-coordinates and y-coordinates in a spatial coordinate system. The four depicted vectors are shown in arbitrarily chosen directions for ease of depiction.

Within the G-code file 130, a vector may be obtained by taking the difference of the x and y-coordinates between a first line and a second line that directly follows the first line previous to it. Each vector may have associated therewith a length (shown in mm) and a direction (shown in degrees), which may also be calculated using standard mathematical formulas. The angles may correspond to an absolute angle between the vector and an axis in a two or three-dimensional coordinate system. Alternatively, the angles may correspond to an angle of a change in direction, wherein the angle of a vector is measured in reference to the preceding vector, which may correspond to the preceding line of the G-code file 130.

The exemplary G-code file 130 is shown to comprise the previously explained codes of G1, with X and Y coordinates. It is further shown to comprise a code E, which may stand for the "extrusion value", or the amount of filament to be extruded. Given further information of the respective instance of 3D printing, such as a type and more specifically, a density of a filament for extrusion, the mass of the filament for extrusion corresponding to the vector may also be calculated, which may be measured in grams (g). The geometric information may be expanded with supplementary information, such as the extrusion value and the type and density of the filament for extrusion, which may provide further information of what type of geometric feature would require the given mass of extruded filament. Such information may be used, either individually or in combination, to link a group of coordinates 132 in the G-code file 130 to a geometric feature 142 of the 3D object 140. Such information may also be accumulated for statistical analysis, which may aid in pattern recognition within the entire 3D object 140.

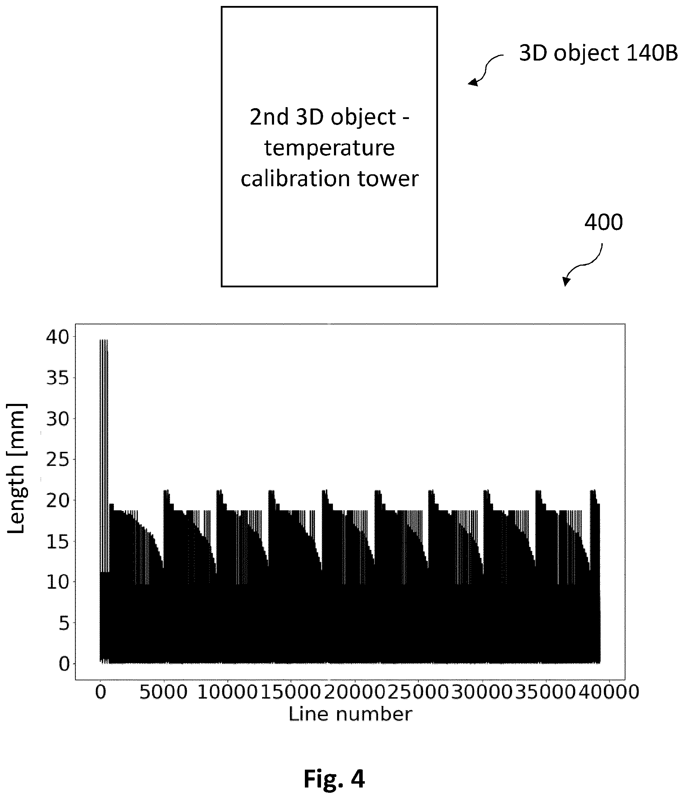

**Figs. 4** depicts a second exemplary 3D object 140B (only described without an image provided), as well as a statistical analysis chart 400 of vector lengths (e.g. line number vs. length in mm) corresponding to each of the lines or specified coordinates of the G-code file 130B (not depicted). The second 3D object 140B is a temperature (calibration) tower, which is a commonly used object for 3D printing purposes. The temperature tower comprises multiple stacks of a thinly formed structure, each stack being formed with varied settings of temperature. This enables examining how various temperature settings influences the strength and adhesion of such structures. Such a structure comprises clearly periodic features.

The statistical analysis chart depicts nine iterations of a very similar pattern regarding vectors associated with a group of lines for the respective vector distances. While the periodic feature varies in each iteration, it enables recognition of a geometric feature 142 of the 3D object 140B to be matched to a group of coordinates 132 of the G-code file 130B. The repetitive patterns in lengths, angles, or directional changes may be determined to correspond to a distinguishable geometric feature with characteristics. The geometric feature may then be more precisely defined by characteristics of the pattern. Furthermore, since each vector length is provided in a measurable unit, such as millimeters, a spatial dimension of the 3D object 140B matching the vector length may be even more easily distinguishable. For example, a geometric feature that corresponds to a vector measuring 39 mm may correspond to a specific portion of the 3D object that also is measured to be 39 mm, which is only used at the beginning portion of the G-code file 130B.

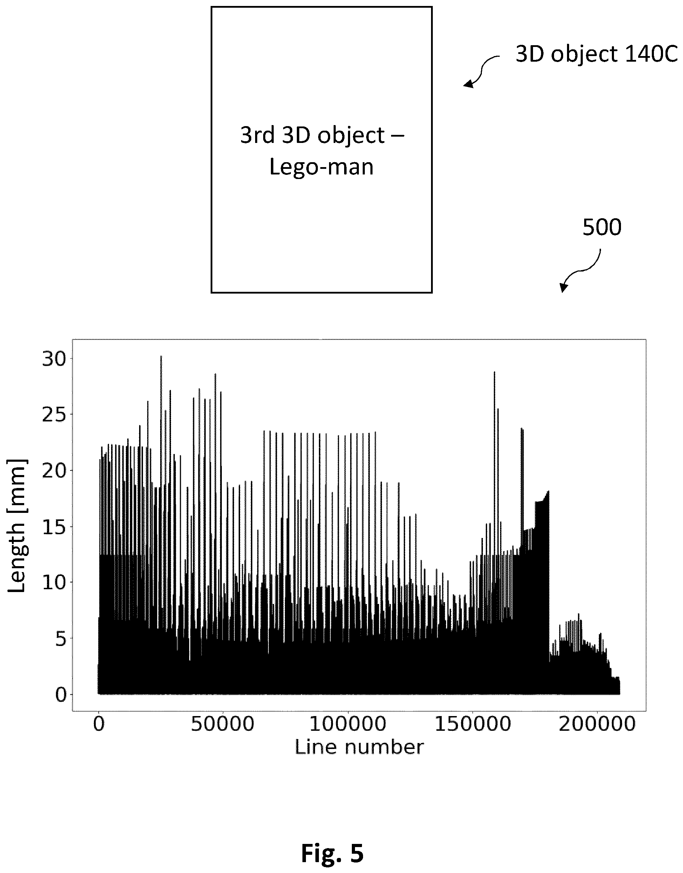

**Fig. 5** depicts a third exemplary 3D object 140C (only described without an image provided), as well as a statistical analysis chart 500 of vector lengths (e.g. line number vs. length in mm) corresponding to each of the lines or specified coordinates of the G-code file 130C (not depicted). The third 3D object 140C is a Lego-man, which may be considered to correspond to a somewhat more complicated geometric profile compared to the temperature tower. In the case of the Lego-man, no periodic geometric features are found. However, certain groups of vectors (e.g. groups of coordinates) may be distinguishable by its corresponding length. For example, a portion of the G-code file 130C for the Lego-man may have a distinguishable feature between 17 and 19 millimeters printed towards the end of the G-code file, among other distinguishable portions. Particularly for 3D objects without periodic patterns related to vector length, further analysis may be useful.

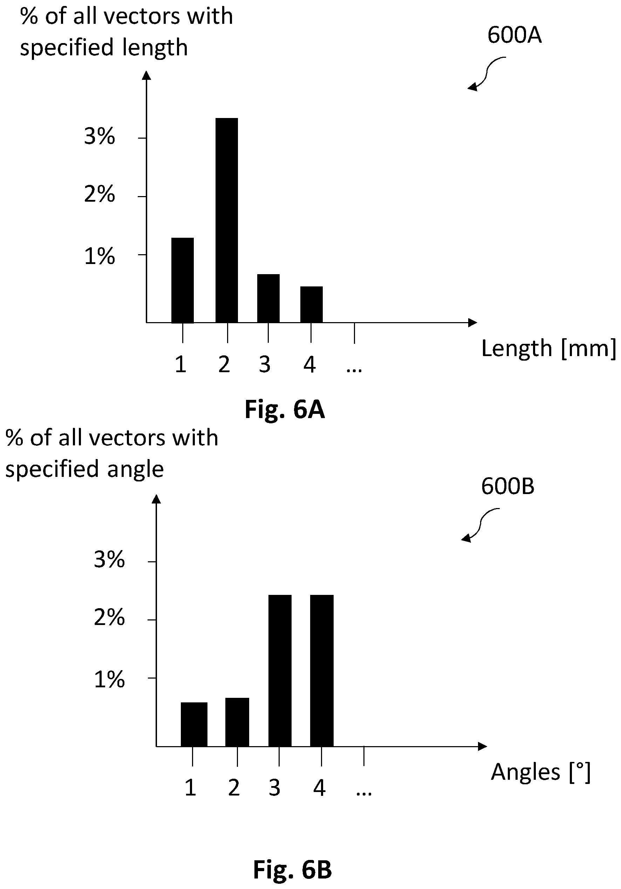

**Figs. 6A and 6B** depict respective examples of further statistical analysis related to the vectors that may be obtained from the specified coordinates 132 of a respective G-code file 130. Fig. 6A depicts a statistical analysis chart 600A related to the length of the vectors. Each vector length, in this case depicted in whole numbers of millimeters, may be depicted according to its percentage within the entire set of vectors obtained using the entire G-code file 130. In the depicted example, vectors with a length of 1 mm may be 1.2% of the entire vector set. Furthermore, vectors with a length of 2 mm may be 3.3%, vectors with a length of 3 mm may be 0.6%, and vectors with a length of 4 mm may be 0.5%, and this may continue until the vector of greatest length is described. For the depicted example, the vector lengths have been rounded to the nearest whole number for ease of perception.

The depicted analysis may be referred to as a probability distribution of vector lengths. Such information may also be calculated for portions of the G-code files (e.g. groups of coordinates) and may be useful in determining certain geometric features 142, which may be used for classification. For example, a sphere will have a clearly different distribution of lengths compared to a cube. While the sphere may have an evenly spread distribution of lengths, the cube may be more extreme, such as having three or fewer vector lengths.

Fig 6B also depicts a similar statistical analysis chart 600B, but corresponding to the angles of the vectors rather than the lengths. The angles may be measured in degrees or radians, among other units. Also, the angles may correspond to an absolute angle or a change in direction compared to the previous vector, as described in Fig. 3. Continuing with previous example, a sphere may have highly repeated and very slight changes in direction, while a cube may have far fewer and more sudden changes in direction.

Based on a certain range of lengths or angles having a high or low percentage of all vectors, the statistical analysis may be used to enable a geometric feature 142 to be more easily distinguished. Fig. 6B also serves simply as an example of many possible forms of statistical analysis, particularly related to absolute angles or changes in angle direction of vectors associated with the G-code file 130. Such statistical analyses of the G-code file 130 may also be used, either individually or in combination, to recognize a distinguishable feature of the 3D object 140.

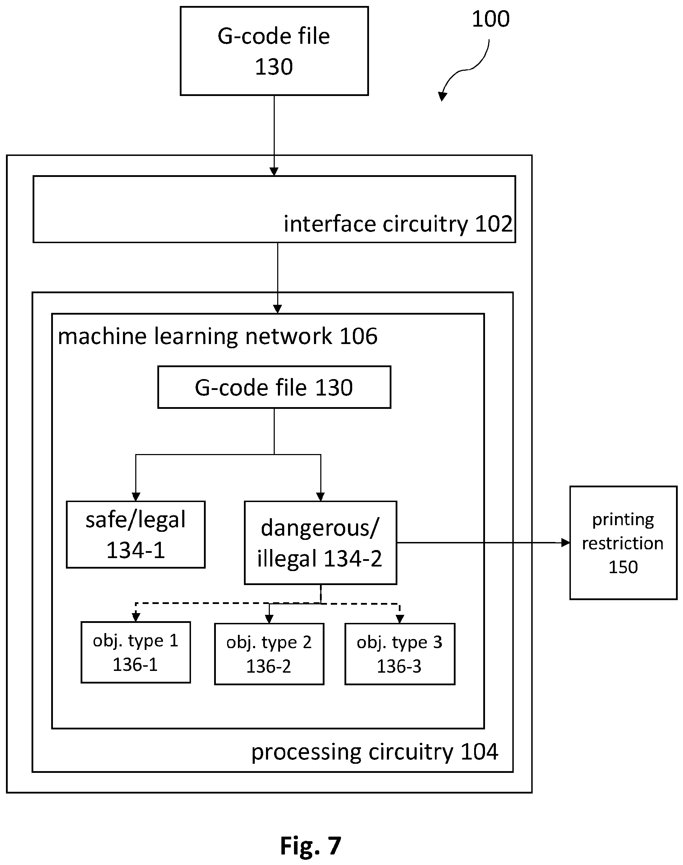

In general, such statistical information may be processed for analysis and recognition of geometric features by the processing circuitry 104. Figs. 2 to 6 demonstrate how specific properties of G-code files may be analyzed and exemplary methods thereof. Such analysis may even be achieved without an associated 3D model to determine whether a represented 3D object 140 is dangerous or illegal. It is also possible to provide such analysis by means of trained machine learning networks/models. Such machine learning networks may be trained with labeled G-code files and optionally with labeled 3D models. Furthermore, labeled statistical analyses are also possible. The apparatus 100 is shown to comprise a trained machine learning network with reference to Figs. 7 to 9.

**Fig. 7** schematically illustrates an exemplary apparatus 100 for administering 3D printing of 3D objects using a machine learning network 106. The machine learning network 106 is configured to receive an input for the G-code file 130 and an output for a classification signal 134 that is indicative of whether or not the 3D object 140 represented by the G-code file 130 is dangerous/illegal. The classification signal 134 may comprise two forms, which may correspond to a first classification signal 134-1 for being safe and/or legal and a second classification signal 134-2 for being dangerous or illegal.

If the 3D object 140 represented by the G-code file 130 is classified with the second classification signal 134-2 and determined to be dangerous or illegal, the machine learning network 106 may be configured to map the G-code file 130 to an object type of dangerous/illegal 3D objects. For example, the G-code file 130 is depicted to correspond to a second object type 136-2 out of a set of three possible object types 136-1; 136-2; 136-3. Furthermore, the trained machine learning network 106 may be configured to output a printing restriction 150 if the object type corresponds to a dangerous or illegal 3D object. The printing restriction 150 may also be customized according to the object type. For example, if the 3D object 140 corresponds to an object type that is seen as presenting a moderate danger, the restrictions may be moderately imposed (such as with the examples provided in Fig. 1). On the other hand, if the 3D object 140 corresponds to an object type that is seen as presenting a high danger, the restrictions may be strictly imposed.

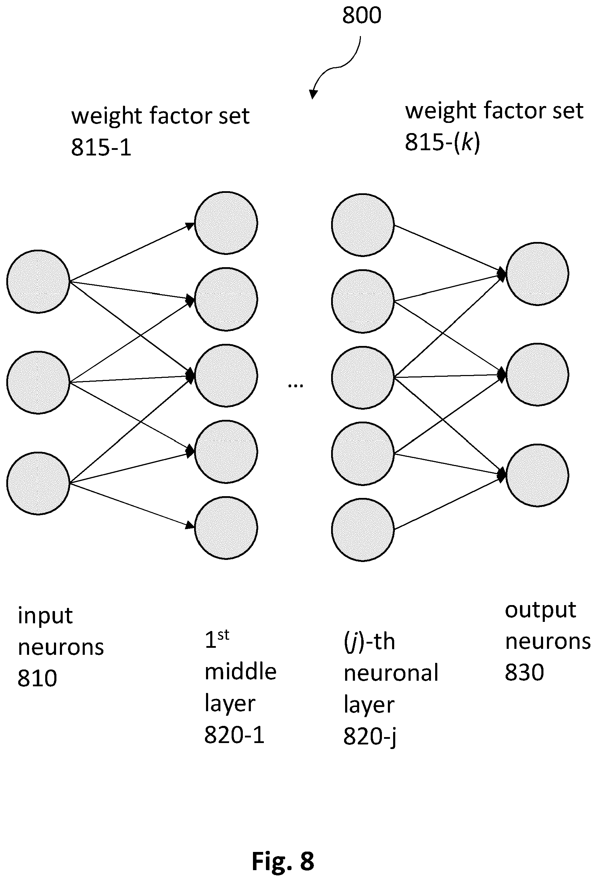

Machine learning refers to algorithms that computer systems may use to perform a specific task without using explicit instructions, instead relying on models and inference. For example, in machine learning, instead of a rule-based transformation of data, a transformation of data may be used, that is inferred from an analysis of historical and/or training data. Furthermore, the trained machine learning network 106 may comprise various architectures, such as a neural network of various types, which will be presented in greater depth with respect to Fig. 8.

**Fig. 8** depicts an exemplary neural network 800, which may be referred to as an artificial neural network (ANN) for the trained machine learning network 106. ANNs are systems that are inspired by biological neural networks, such as can be found in a retina or a brain. ANNs comprise a plurality of interconnected nodes and a plurality of connections, so-called edges, between the nodes. There are usually three types of nodes, input nodes 810 that receive input values, such as data of the G-code file 130, hidden nodes that are (only) connected to other nodes, and output nodes 830 that provide output values, such as the classification signal 134-1; 134-2. The ANN may comprise a plurality of layers 820-1 to 820-j (e.g. "j" layers) of neurons between the input neurons 810 and output neurons 830 that may be used for classification of the G-code file 130.

Each node within a layer may represent an artificial neuron. Each edge may transmit information, from one node to another. The output of a node may be defined as a (non-linear) function of its inputs (e.g. of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

The machine learning model 106 may comprise a deep neural network with a plurality of weight factor sets 815-1 to 815-k (e.g. "k" weight factor sets) between the input and output nodes. The weight factor sets may generally also be referred to as filters or kernels. The weight factor set may comprise adjustable or learnable weights. More specifically, the machine learning model 106 comprises a convolutional neural network (CNN), which has the ability to learn and recognize complex patterns in sequences of lines. The CNN may be configured to perform recognition within the line sequences, particularly related to distinguishable geometric features 142.

The CNN may comprise one or more convolutional layers, activation layers, pooling layers, fully connected layers, dropout layers, and batch normalization layers. In the convolutional layers, filters may be applied to detect and extract features, such as edges, lines, and shapes related to geometric features 142. In particular, each convolutional layer may comprise a weight factor set. The output of one convolutional layer may become the input for the next, which may allow the CNN to learn increasingly complex features within the G-code file 130. Activation layers may introduce non-linearity to the CNN, which may allow it to model complex relationships between geometric features 142 of the 3D object 140. Such features may be derived from the lengths and angles of vectors from the G-code file lines, as previously described. An output of a layer may be in the form of a feature map with certain spatial dimensions. The pooling layers may progressively down-sample (e.g. reduce the size of) the spatial dimensions of the feature maps. More specifically, each pooling layer may have a different pooling size and stride, which may allow the network to capture different levels of spatial information. The pooling layers may reduce the size of data by selecting the most prominent geometric features provided as a layer input.

The fully connected layers may then combine the extracted geometric features. Generally, towards the end of the CNN, multiple fully connected layers may be stacked to provide increased modeling capacity and allow for complex decision boundaries. Dropout layers may be added after fully connected layers and convolutional layers at various stages to improve generalization and to avoid overfitting, whereby the CNN may be trained too much in a particular direction. Finally, the CNN may include batch normalization layer after a convolutional or fully connected layer to normalize the output of a layer and to improve training stability. Generally, batch normalization layers may facilitate better feature learning and model convergence. The CNN may comprise a specified number of each layer type in order to optimize an accurate learning of classification of whether a G-code file 130 corresponds to the first classification 134-1 of safe and/or legal or the second classification of dangerous or illegal 134-2.

As more and more G-code files for dangerous or illegal objects are accumulated and provided to the CNN, searching for relevant features within a large collection of data may also lead to difficulties in processing. The CNN is able to process such large collections of data more efficiently through the use of attention mechanisms. Attention mechanisms provide a way to selectively focus on specific parts of input data, rather than processing the entire input data at once. This allows the CNN to dynamically allocate its resources to the most relevant parts of the G-code files 130, improving accuracy and efficiency. For example, with certain characteristics already identified within past G-code files that are known to be associated with dangerous or illegal objects, the attention mechanisms enable the CNN to start a search within the G-code file 130 for similar or related characteristics and then gradually search more broadly therefrom.

Attention-based mechanisms may be included in the convolutional layers, fully connected layers, and pooling layers. For example, attention mechanisms may be used to weight the importance of different spatial locations within convolutional feature maps instead of applying a fixed set of weights to the entire feature map. This may dynamically emphasize relevant regions, which may emphasize certain geometric features 142 of the 3D object 140. In a further example, attention-based pooling may be used to dynamically select the most important features during down-sampling. Additionally, dedicated attention layers may also be added to the CNN, to explicitly model attention mechanisms. For example, the attention layers may receive inputs from previous layers and learn attention weights based on the relevance or importance of different inputs or features. By their incorporation, other layers may benefit from these learned attention weights and adjust computations accordingly.

The attention mechanisms may be a soft attention mechanism, which applies learning weights for a weighted sum of an input sequence within input data to compute a context vector. Each of the weights may indicate an importance of each element in the sequence. The attention mechanism may also be a hard attention mechanism, which involves selecting a single input element for learning via a discrete decision. Furthermore, the attention mechanism may be a multi-head attention mechanism, which forms subunits of the learning model into multiple "heads", each of which learns a different representation of the input sequence by computing its own set of weights. This may allow the CNN to manipulate different parts of the input sequence in different ways. The CNN may be configured to apply different forms of attention mechanisms for an improved efficiency of processing of the G-code file 130.

The CNN may also be configured to apply continual or online learning solutions. Continual learning, also known as lifelong learning, involves learning from a continuous stream of data, where the data arrives in a sequential and potentially infinite manner. Online machine learning involves learning from incremental data updates without re-training the entire model for each update. While traditional machine learning usually involves a complete re-training of a model when an update with new ground truth information is desired, continual or online learning enables a more efficient approach for multiple update iterations. Applying continual and/or online learning solutions may enable the machine learning model 106 to learn from multiple iterations of receiving ground truth information while retaining the knowledge it has acquired from past training. This may enable the machine learning model 106 to adapt toward new forms of dangerous or illegal objects that are written in new 3D models and G-code files.

The machine learning model 106 may apply continual and/or online learning solutions when receiving further G-code files and 3D models. In particular, a catastrophic forgetting, where a learning of the new information leads to forgetting previous knowledge, may be avoided. For example, an uncommon characteristic identified in a past G-code file may have been identified in a pattern matching analysis. While uncommon, if such an identified characteristic is a reliable indicator of being a dangerous or illegal object, it is important for the machine learning model 106 to maintain knowledge thereof as the pool of ground truth information G-code files and 3D models is expanded. The machine learning model 106 may apply continual and online learning to retain such uncommon characteristics.

The machine learning model 106 may also apply techniques related to transfer learning. In transfer learning, a model trained on a specific task may be repurposed to a different but related task. As such, the knowledge gained from learning a previous task can save time and computational resources to improve the performance of the model for the new task. This may be applied by the machine learning model 106 in the case of identifying geometric features 142 that may be associated with a dangerous or illegal object in new types of objects. If a geometric feature 142 is identified that is similar enough, then a method of pattern recognition may be adapted from one that has already been established for a more efficient pattern recognition.

Other similar machine learning techniques that may be applied by the machine learning model 106 are elastic weight consolidation and prioritized experience memory. Elastic weight consolidation may enable the machine learning model 106 to learn a new task, such as searching for a newly identified characteristic, without overwriting weights for a previously learned task. In particular, an importance of each weight in a sequence may be computed in a network for the previously learned task and the importance values can be used to adjust the learning rate during a training for a new task. This may help to preserve knowledge acquired by the machine learning model 106 related to the previously learned task.

The machine learning model 106 may also apply prioritized experience learning. Instead of using only the most recently received ground truth information G-code files and 3D models to update the machine learning model 106, such data can also be stored in a memory, and an update of the machine learning model 106 can incorporate random samples from the past ground truth information. Such an approach may improve efficiency and prevent overfitting of a model within the machine learning model 106. In particular, a priority value may be assigned to each sample within a series of samples, placing a greater importance on specific samples. Samples with greater importance are then sampled more frequently to be included in model updates. With such a configuration, the most important characteristics found in past G-code files and 3D models may be incorporated into updates more often, enabling a fine-tuning of the machine learning model 106 that further improves efficiency and prevents overfitting.

The CNN may also apply various forms of machine learning models to classify the G-code file 130 either the first classification signal 134-1 of safe and/or legal or the second classification signal of dangerous or illegal 134-2. For example, the CNN may include a decision tree model. Decision tree models can be used for pattern recognition in sequences of lines of the G-code file by considering data points corresponding to each line. Decision tree models may be used for tasks related to classification of data, such as classification of geometric features 142. The decision tree model may include splitting the G-code file into subsets based on values of features toward creating homogenous subsets for a target variable, such as a specific geometric feature 142. The geometric feature 142 may have a distinguishable form, which may relate to size, curvature, or a repeating pattern. The splitting of the G-code file or of data corresponding to a portion of the G-code file may continue until a stopping criterion is met.

Alternatively, the CNN may comprise a support vector model, a random forest model or a gradient boosting model. Support vector models (i.e. support vector networks) are supervised learning models with associated learning algorithms that may be used to analyze data (e.g. in classification or regression analysis). Support vector machines may be trained by providing an input with a plurality of training input values that belong to one of two categories. The support vector machine may be trained to assign a new input value to one of the two categories. Alternatively, the CNN may comprise a Bayesian network, which is a probabilistic directed acyclic graphical model. A Bayesian network may represent a set of random variables and their conditional dependencies using a directed acyclic graph. Alternatively, the CNN may be based on a genetic algorithm, which is a search algorithm and heuristic technique that mimics the process of natural selection.

The processing circuitry 104 may be configured to use one or more of the above described features of the trained machine learning model 106 to perform a pattern recognition analysis of the G-code file 130. Based on a training by labeled G-code files, the machine learning model 106 may be configured to receive the G-code file 130 and organize detected geometric features 142 into categories or object types 136. The pattern recognition analysis may further include identifying trends and regularities in the G-code file 130, such as repetitive geometric features 142. In particular, the pattern recognition analysis may include searching the G-code file 130 for trends and regularities and determine the distinguishable geometric features, as previously described. As such, the machine learning model 106 may be further configured to receive the G-code file 130 in an unstructured or unlabeled form as input data, provide structure or labels by performing the pattern recognition analysis, and generate an output with structure and labels.

In general, the descriptions of the attention-based mechanisms and applications of other machine learning model structures may also be applied to alternative ANN structures that do not correspond to a CNN architecture. The various machine learning architectures previously described may be chosen and combined as necessary to enable an efficient learning and processing for classification of the received G-code file 130.

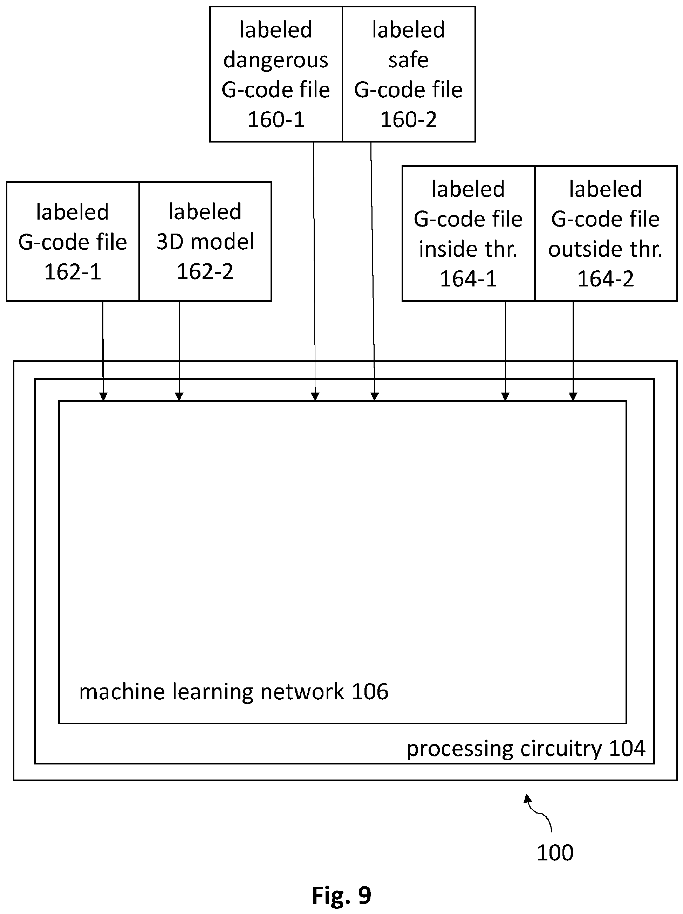

In general, the machine learning network 106 may be configured to be updated (e.g. further update its weight factor sets of respective layers previously described) in multiple rounds of training based on incremental training data. For example, as a new G-code file that corresponds to a dangerous or illegal object becomes known, it may be provided to the machine learning network 106 as training data as part of a new iteration of training. The types of training data used as ground truth information by the machine learning network 106 will be described in greater depth with reference to Fig. 9.

**Fig. 9** schematically illustrates exemplary ground truth information for a further exemplary machine learning network. Each incremental update of ground truth information may include one or more labeled dangerous/illegal G-code files 160-1 corresponding to a 3D object 140 that has been determined to be dangerous or illegal. Each incremental update may also include one or more labeled safe/legal G-code files 160-2 corresponding to a 3D object that has been determined to be safe and/or legal. Given enough labeled G-code files of both safe/legal and dangerous/illegal 3D objects, the machine learning network 106 may be configured to perform the classification of the received G-code file 130, as previously described.

To improve the training of the machine learning network 106, the ground truth information may further comprise more specific forms of training data, which may also be provided in incremental updates. For example, the training data may include a labeled G-code file 162-1 that corresponds to an accompanying 3D model file 162-2 (such as the previously described ".stl" file), which will be referred to as a labeled file pair 162-1; 162-2. The labeled file pair 162-1; 162-2 may correspond either to a dangerous or illegal object or to a safe and/or legal object. By providing such training data, the machine learning network 106, particularly with its many possible features described in Fig. 8, may be used to make better associations between lines of the received G-code file 130 and its corresponding geometric features 142 during processing for classification. Processes related to image detection may also be used in association with pattern recognition within the lines of the associated G-code file.

The training data provided in incremental updates may further include an "inside-threshold" labeled G-code file 164-1 and an "outside-threshold" labeled G-code file 164-2. Such training data may be used as a comparison to a G-code file that is known to correspond to a known dangerous or illegal 3D object. This may be particularly useful for training if such a 3D object, with corresponding 3D models and/or G-code files being widely shared on the Internet. Some G-code files may be slightly manipulated while maintaining the same geometric shape and features necessary for the object to avoid detection. For such cases, the training data may include similar G-code files that are either inside a threshold of similarity or outside a threshold of similarity, and labeled as such.

A threshold of similarity may relate to one or more specific features of the 3D object that may not be changed beyond a certain amount. For example, a barrel of a gun may be a specified feature to be able to fit and fire bullets of a specific shape. As such, the barrel may not be changed beyond a threshold, which may be determined through trial-and-error or other means. A similarity threshold may also apply to other geometric features 142 that may not be changed beyond a certain amount, such as connecting structures or portions of a structure that must fit into another structure. While such training data is meant for a specific case of a widely distributed 3D model and/or G-code file of a dangerous or illegal object, such training may generally improve the recognition capabilities of geometric features 142 and accuracy in classification of the received G-code file 130.

In general, the labeled ground truth information may be supplemented with labeled statistical analyses. Such statistical analyses may provide greater accuracy for a training of the machine learning network 106 for each type of ground truth information previously described. For example, geometric features of a 3D model used for training may be specifically labeled to correspond to a group of coordinates within a G-code file used for training, analogous to Fig. 2. Furthermore, portions of G-code files used for training may be labeled as corresponding to periodic features that are easily recognizable, such as with a statistical analysis of lengths corresponding to respective lines of G-code files, as presented in Fig. 4. The portions of the graph depicted in Fig. 4 may be labeled to correspond to a group of lines (e.g. coordinates) of the G-code file, which may enable the machine learning model to learn specific methods of analysis. This may be expanded to using other labeled statistical analyses, such as those depicted in Figs. 6A and 6B. In general, any form of statistical analysis may be performed, labeled to correspond to a portion of a training G-code file and/or training 3D model, and provided as ground truth information. Each label may also provide information of being associated with a geometric feature that is determined to be dangerous/illegal or safe/legal.

In general, the machine learning network 106 may be a supervised machine learning network, which may be trained using training input data. In supervised learning, the machine learning network 106 is trained using a plurality of training samples, wherein each sample may comprise a plurality of input data values, and a plurality of desired output values, i.e. each training sample is associated with a desired output value. By specifying both training samples and desired output values, the machine learning network 106 may "learn" which output value to provide based on an input sample that is similar to the samples provided during the training.

Apart from supervised learning, semi-supervised learning may be used. In semi-supervised learning, some of the training samples lack a corresponding desired output value. Supervised learning may be based on a supervised learning algorithm (e.g. a classification algorithm, a regression algorithm or a similarity learning algorithm. Classification algorithms may be used when the outputs are restricted to a limited set of values (categorical variables), i.e. the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine learning network 106. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters.

Reinforcement learning is another group of machine learning algorithms. In other words, reinforcement learning may be used to train the machine learning network 106. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

More specifically, in the case of a CNN, the weight factor sets may be trained by a back-propagation algorithm. The back-propagation algorithm may calculate gradients of the CNN's parameters with respect to a loss function, which may allow the weights to be updated in a way that minimizes the loss. The back-propagation algorithm may include a forward pass, during which the labeled ground truth data may be provided as input to the CNN and the CNN may perform a series of computations to generate a prediction, such as classification prediction.

For example, the G-code file 130 may be provided as input data and passed through the pooling layers and fully connected layers to produce the classification prediction. The classification prediction may be in the form of a probability of an outcome. The output prediction may then be compared to the labels of the ground truth information. A loss function may also be measured, wherein a discrepancy between the prediction and the label is measured. For example, a gradient of a loss with respect to each layer may be calculated. Starting from the output layer, the gradient of the loss with respect to the activation (e.g. use) of each layer is computed, which may continue through each previous layer, which may be referred to as a backward pass. A chain rule may be used to calculate gradients at each layer, wherein a gradient of the loss with respect to one layer's activation may be multiplied by a gradient of another layer's activation.

Once the gradients of the weight factor sets are calculated, optimization algorithms, such as stochastic gradient descent or its variants (e.g. Adam) may be used to update the weights. More specifically, the weights may be adjusted in a direction that reduces the loss by following the gradients computed during the backward pass. The back-propagation algorithm may be repeated for multiple iterations, with each iteration using a labeled G-code file that is classified to either be safe and/or legal or to be dangerous or illegal.

To expand the pool of G-code files of the ground truth information, the machine learning network may be trained using both authentic and synthetic G-code files. For example, the synthetic G-code files may have a very similar structure compared to the authentic G-code files, whereby similar statistical properties may be calculated. The synthetic G-code files may be externally generated and evaluated to correspond to either a safe and/or legal G-code file or a dangerous or illegal G-code file.

The pool of ground truth information may be also expanded with a data-sharing system. One or more different and equally or similarly configured apparatuses compared to the apparatus 100 may follow the same previously described procedure of saving the (current) G-code file 130 into a memory, such that it becomes a stored past G-code file to be used as ground truth information. Such past G-code files may be stored with a corresponding label of whether or not it is associated with a dangerous or illegal object. The past G-code files may also be shared in a central location, downloaded by other apparatuses, and applied as ground truth information to update the training for a respective machine learning network 106. As such, the pool of ground truth information may greatly expand. Furthermore, the apparatus 100 may be quickly updated with any dangerous or illegal 3D objects that are gaining popularity on the Internet. Ground truth information may also be manually generated with labels of an entire 3D object or geometric features of a 3D object. For example, such labels within the file may be provided based on human perception or provided with a confirmation by human perception and shared in a similar way.

In general, the apparatus 100 may provide a means for limiting dangers associated with 3D objects that are printable by 3D printers to individuals and society at large. Based on a proper configuration, the processing circuitry 104 may be configured to classify any received G-code file 130 with either a first classification signal 134-1 of safe and/or legal or with a second classification signal 134-2 of dangerous or illegal. The processing circuitry 104 may make use of specific features within the G-code file 130 and corresponding statistical analysis, as outlined with reference to Figs. 2 to 6. Furthermore, the processing circuitry may make use of a machine learning network 106, with the many related features outlined with reference to Figs. 7 to 9. In particular, the features of the G-code file and corresponding statistical analysis may be used by the machine learning network 106, such as in the form of labeled ground truth information, which may be in labeled forms as presented in Fig. 9 and furthermore, as presented in Figs. 2 to 6. Each of these outlined features may be combined as appropriate to optimize the performance of the apparatus 100, which may evolve with the growth of the 3D printing technology to maintain safety.

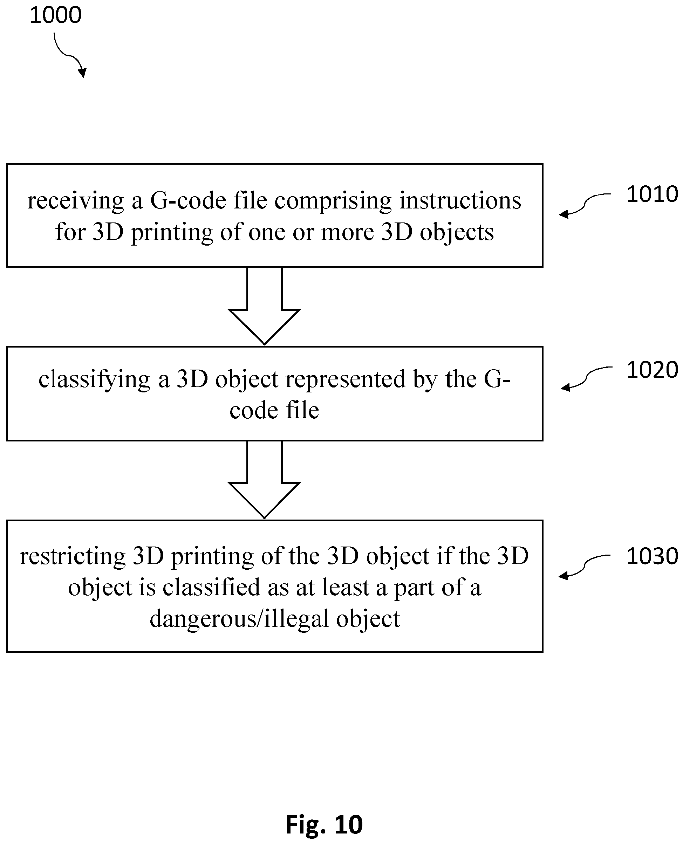

**Fig. 10** illustrates a flowchart of an exemplary method 1000 for administering 3D printing of 3D objects.

The method 1000 includes receiving 1010 a G-code file comprising instructions for 3D printing of one or more 3D objects. The method 500 further includes classifying 1020 a 3D object represented by the G-code file. Furthermore, the method 1000 includes restricting 1030 3D printing of the 3D object if the 3D object is classified as at least a part of a dangerous/illegal object.

**The aspects and features described** in relation to a particular one of the previous examples may also be combined with one or more of the further examples to replace an identical or similar feature of that further example or to additionally introduce the features into the further example.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several substeps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus (100) for printing three-dimensional, 3D, objects by a 3D printer, the apparatus (100) comprising:
interface circuitry (102) configured to receive a G-code file (130) comprising instructions for 3D printing of one or more 3D objects (140), wherein the G-code file (130) specifies coordinates (132-1; 132-2); and
processing circuitry (104) configured to
classify a 3D object (140) represented by the G-code file (130) based on spatial dimensions of a geometric feature (142-1; 142-2) of the 3D object (140) corresponding to the coordinates (132-1; 132-2), and
restrict 3D printing of the 3D object (140) if the 3D object (140) is classified as at least a part of a dangerous/illegal object,
wherein the processing circuitry (104) comprises a trained machine learning network (106) having an input for the G-code file (130) and an output for a classification signal (134-1; 134-2) that is indicative of whether or not the 3D object (140) represented by the G-code file (130) is dangerous/illegal, the apparatus **characterized in that** the trained machine learning network (106) is based on an attention-based convolutional neural network.

2. The apparatus (100) of claim 1, wherein the G-code file (130) specifies a path of a tool of the 3D printer, and wherein the processing circuitry (104) is configured to classify the 3D object (140) based on spatial dimensions corresponding to the path.

3. The apparatus (100) of claim 1 or claim 2, wherein the trained machine learning network (106) is configured to map the G-code file (130) to an object type (136-1; 136-2; 136-3) of dangerous/illegal 3D objects if it is determined that the G-code file (130) corresponds to a dangerous/illegal 3D object.

4. The apparatus (100) of claim 3, wherein the object type (136-1; 136-2; 136-3) corresponds to at least one of a barrel, frame, receiver, slide, magazine, hammer, handle, cartridge, trigger, spring, connecting rod, and pin of a gun.

5. The apparatus (100) of any one of the previous claims, wherein the trained machine learning network (106) is configured to further update model parameters based on incremental training data including one or more new G-code files corresponding to dangerous/illegal objects not included in previous training data.

6. The apparatus (100) of any one of the previous claims, wherein the interface circuitry (102) is configured to receive a request for 3D printing of the 3D object (140) according to the G-code file (130), and wherein restricting 3D printing of the 3D object (140) by the processing circuitry (104) includes at least one of:
requiring 3D printing to be done through a user profile;
sending and/or storing a notification of the request and/or instance of 3D printing of the 3D object (140) associated with the user profile;
performing 3D printing of a modified version of the 3D object (140), and
blocking the request for 3D printing of the 3D object (140).

7. A method (1000) for printing three-dimensional, 3D, objects by a 3D printer using a trained machine learning network (106) based on an attention-based convolutional neural network, the method (1000) comprising:
receiving (1010) a G-code file (130) comprising instructions for 3D printing of one or more 3D objects (140), wherein the G-code file (130) specifies coordinates (132-1; 132-2);
classifying (1020) a 3D object (140) represented by the G-code file (130) based on spatial dimensions of a geometric feature (142-1; 142-2) of the 3D object (140) corresponding to the coordinates (132-1; 132-2),
outputting a classification signal (134-1; 134-2) that is indicative of whether or not the 3D object (140) represented by the G-code file (130) is dangerous/illegal, and
restricting (1030) 3D printing of the 3D object (140) if the 3D object (140) is classified as at least a part of a dangerous/illegal object.

8. The method (1000) of claim 7, wherein classifying (1020) comprises using a machine learning network (106) to determine whether or not the 3D object (140) represented by the G-code file (130) is dangerous/illegal and to map the G-code file (130) to an object type of dangerous/illegal objects if it is determined that the G-code file (130) corresponds to a dangerous/illegal 3D object.

9. The method (1000) of claim 8, further comprising training the machine learning network (106) based on ground truth information including labeled G-code files (160-1) representing dangerous objects and labeled G-code files (160-2) representing non-dangerous objects.

10. The method (1000) of claim 9, wherein the training of the machine learning network (106) is based on ground truth information including labeled G-code files (162-1) and labeled 3D models (162-2), wherein a labeled G-code file (162-1) is indicated to correspond to a labeled 3D model, and wherein a group of coordinates of the labeled G-code file (162-1) is indicated to correspond to a geometric feature of the 3D model (162-2).

11. The method (1000) of claim 9 or claim 10, wherein the training of the machine learning network (106) is based on ground truth information including labeled G-code files (164-1; 164-2) indicating to be within or outside of a predefined degree of similarity of a G-code file determined to correspond to a dangerous/illegal 3D object (160-1).

12. The method (1000) of any one of claims 9 to 11, wherein the ground truth information includes authentic and/or synthetic G-code files.

## Patentansprüche

1. Eine Vorrichtung (100) zum Drucken von dreidimensionalen, 3D, Objekten durch einen 3D-Drucker, die Vorrichtung (100) umfassend:
eine Schnittstellenschaltungsanordnung (102), die ausgebildet ist, um eine G-Code-Datei (130) zu empfangen, die Anweisungen zum 3D-Drucken von einem oder mehreren 3D-Objekten (140) umfasst, wobei die G-Code-Datei (130) Koordinaten (132-1; 132-2) spezifiziert; und
eine Verarbeitungsschaltungsanordnung (104), die ausgebildet ist zum
Klassifizieren eines 3D-Objekts (140), das durch die G-Code-Datei (130) repräsentiert wird, basierend auf räumlichen Dimensionen eines geometrischen Merkmals (142-1; 142-2) des 3D-Objekts (140), das den Koordinaten (132-1; 132-2) entspricht, und
Einschränken des 3D-Druckens des 3D-Objekts (140), wenn das 3D-Objekt (140) als zumindest ein Teil eines gefährlichen/illegalen Objekts klassifiziert wird,
wobei die Verarbeitungsschaltungsanordnung (104) ein trainiertes Maschinelles-Lernen-Netzwerk (106) umfasst, das einen Eingang für die G-Code-Datei (130) und einen Ausgang für ein Klassifizierungssignal (134-1; 134-2) aufweist, das anzeigt, ob das durch die G-Code-Datei (130) repräsentierte 3D-Objekt (140) gefährlich/illegal ist oder nicht,
wobei die Vorrichtung **dadurch gekennzeichnet ist, dass** das trainierte Maschinelles-Lernen-Netzwerk (106) auf einem aufmerksamkeitsbasierten Convolutional Neural Network basiert.

2. Die Vorrichtung (100) gemäß Anspruch 1, wobei die G-Code-Datei (130) einen Pfad eines Werkzeugs des 3D-Druckers spezifiziert, und wobei die Verarbeitungsschaltungsanordnung (104) ausgebildet ist, um das 3D-Objekt (140) basierend auf räumlichen Dimensionen, die dem Pfad entsprechen, zu klassifizieren.

3. Die Vorrichtung (100) gemäß Anspruch 1 oder Anspruch 2, wobei das trainierte Maschinelles-Lernen-Netzwerk (106) ausgebildet ist, um die G-Code-Datei (130) auf einen Objekttyp (136-1; 136-2; 136-3) von gefährlichen/illegalen 3D-Objekten abzubilden, wenn bestimmt wird, dass die G-Code-Datei (130) einem gefährlichen/illegalen 3D-Objekt entspricht.

4. Die Vorrichtung (100) gemäß Anspruch 3, wobei der Objekttyp (136-1; 136-2; 136-3) zumindest einem von einem Lauf, einem Rahmen, einem Verschlussgehäuse, einem Schlitten, einem Magazin, einem Hahn, einem Griff, einer Patrone, einem Abzug, einer Feder, einer Verbindungsstange und einem Pin einer Schusswaffe entspricht.

5. Die Vorrichtung (100) gemäß einem der vorangehenden Ansprüche, wobei das trainierte Maschinelles-Lernen-Netzwerk (106) ausgebildet ist, um ferner Modellparameter basierend auf inkrementellen Trainingsdaten zu aktualisieren, die eine oder mehrere neue G-Code-Dateien umfassen, die gefährlichen/illegalen Objekten entsprechen, die nicht in vorherigen Trainingsdaten enthalten sind.

6. Die Vorrichtung (100) gemäß einem der vorangehenden Ansprüche, wobei die Schnittstellenschaltungsanordnung (102) ausgebildet ist, um eine Anforderung zum 3D-Drucken des 3D-Objekts (140) gemäß der G-Code-Datei (130) zu empfangen, und wobei das Einschränken des 3D-Druckens des 3D-Objekts (140) durch die Verarbeitungsschaltungsanordnung (104) zumindest eines umfasst von:
Erfordern, dass das 3D-Drucken durch ein Benutzerprofil durchgeführt wird;
Senden und/oder Speichern einer Benachrichtigung über die Anforderung und/oder die Instanz des 3D-Druckens des 3D-Objekts (140), das dem Benutzerprofil zugeordnet ist;
Durchführen des 3D-Druckens einer modifizierten Version des 3D-Objekts (140), und
Blockieren der Anforderung zum 3D-Drucken des 3D-Objekts (140).

7. Ein Verfahren (1000) zum Drucken von dreidimensionalen, 3D, Objekten durch einen 3D-Drucker unter Verwendung eines trainierten Maschinelles-Lernen-Netzwerks (106) basierend auf einem aufmerksamkeitsbasierten Convolutional Neural Network, das Verfahren (1000) umfassend:
Empfangen (1010) einer G-Code-Datei (130), die Anweisungen zum 3D-Drucken von einem oder mehreren 3D-Objekten (140) umfasst, wobei die G-Code-Datei (130) Koordinaten (132-1; 132-2) spezifiziert;
Klassifizieren (1020) eines 3D-Objekts (140), das durch die G-Code-Datei (130) repräsentiert wird, basierend auf räumlichen Dimensionen eines geometrischen Merkmals (142-1; 142-2) des 3D-Objekts (140), das den Koordinaten (132-1; 132-2) entspricht,
Ausgeben eines Klassifizierungssignals (134-1; 134-2), das anzeigt, ob das durch die G-Code-Datei (130) repräsentierte 3D-Objekt (140) gefährlich/illegal ist oder nicht, und
Einschränken (1030) des 3D-Druckens des 3D-Objekts (140), wenn das 3D-Objekt (140) als zumindest ein Teil eines gefährlichen/illegalen Objekts klassifiziert wird.

8. Das Verfahren (1000) gemäß Anspruch 7, wobei das Klassifizieren (1020) ein Verwenden eines Maschinelles-Lernen-Netzwerks (106) umfasst, um zu bestimmen, ob das durch die G-Code-Datei (130) repräsentierte 3D-Objekt (140) gefährlich/illegal ist oder nicht, und um die G-Code-Datei (130) auf einen Objekttyp von gefährlichen/illegalen Objekten abzubilden, wenn bestimmt wird, dass die G-Code-Datei (130) einem gefährlichen/illegalen 3D-Objekt entspricht.

9. Das Verfahren (1000) gemäß Anspruch 8, ferner umfassend ein Trainieren des Maschinelles-Lernen-Netzwerks (106) basierend auf Ground-Truth-Informationen, umfassend markierte G-Code-Dateien (160-1), die gefährliche Objekte repräsentieren, und markierte G-Code-Dateien (160-2), die nicht-gefährliche Objekte repräsentieren.

10. Das Verfahren (1000) gemäß Anspruch 9, wobei das Trainieren des Maschinelles-Lernen-Netzwerks (106) auf Ground-Truth-Informationen basiert, umfassend markierte G-Code-Dateien (162-1) und markierte 3D-Modelle (162-2), wobei angezeigt wird, dass eine markierte G-Code-Datei (162-1) einem markierten 3D-Modell entspricht, und wobei angezeigt wird, dass eine Gruppe von Koordinaten der markierten G-Code-Datei (162-1) einem geometrischen Merkmal des 3D-Modells (162-2) entspricht.

11. Das Verfahren (1000) gemäß Anspruch 9 oder Anspruch 10, wobei das Trainieren des Maschinelles-Lernen-Netzwerks (106) auf Ground-Truth-Informationen basiert, umfassend markierte G-Code-Dateien (164-1; 164-2), die anzeigen, innerhalb oder außerhalb eines vordefinierten Ähnlichkeitsgrades einer G-Code-Datei zu sein, die bestimmt wird, einem gefährlichen/illegalen 3D-Objekt (160-1) zu entsprechen.

12. Das Verfahren (1000) gemäß einem der Ansprüche 9 bis 11, wobei die Ground-Truth-Informationen authentische und/oder synthetische G-Code-Dateien umfassen.

## Revendications

1. Appareil (100) pour imprimer des objets tridimensionnels, 3D, par une imprimante 3D, l'appareil (100) comprenant :
une circuiterie d'interface (102) configurée pour recevoir un fichier de code G (130) comprenant des instructions pour l'impression 3D d'un ou plusieurs objets 3D (140), le fichier de code G (130) spécifiant des coordonnées (132-1 ; 132-2) ; et
une circuiterie de traitement (104) configurée pour
classifier un objet 3D (140) représenté par le fichier de code G (130) sur la base de dimensions spatiales d'une caractéristique géométrique (142-1 ; 142-2) de l'objet 3D (140) correspondant aux coordonnées (132-1 ; 132-2), et
restreindre l'impression 3D de l'objet 3D (140) si l'objet 3D (140) est classifié comme au moins une partie d'un objet dangereux/illégal,
la circuiterie de traitement (104) comprenant un réseau d'apprentissage automatique entraîné (106) ayant une entrée pour le fichier de code G (130) et une sortie pour un signal de classification (134-1 ; 134-2) qui indique si l'objet 3D (140) représenté par le fichier de code G (130) est dangereux/illégal ou non,
l'appareil étant **caractérisé en ce que** le réseau d'apprentissage automatique entraîné (106) est basé sur un réseau neuronal convolutif basé sur l'attention.

2. Appareil (100) selon la revendication 1, dans lequel le fichier de code G (130) spécifie un trajet d'un outil de l'imprimante 3D, et dans lequel la circuiterie de traitement (104) est configurée pour classifier l'objet 3D (140) sur la base de dimensions spatiales correspondant au trajet.

3. Appareil (100) selon la revendication 1 ou la revendication 2, dans lequel le réseau d'apprentissage automatique entraîné (106) est configuré pour mapper le fichier de code G (130) à un type d'objet (136-1 ; 136-2 ; 136-3) d'objets 3D dangereux/illégaux s'il est déterminé que le fichier de code G (130) correspond à un objet 3D dangereux/illégal.

4. Appareil (100) selon la revendication 3, dans lequel le type d'objet (136-1 ; 136-2 ; 136-3) correspond à au moins l'un parmi un canon, une carcasse, un récepteur, une culasse, un chargeur, un chien, une poignée, une cartouche, une détente, un ressort, une tige de raccordement et une goupille d'une arme à feu.

5. Appareil (100) selon l'une des revendications précédentes, dans lequel le réseau d'apprentissage automatique entraîné (106) est configuré pour mettre à jour davantage des paramètres de modèle sur la base de données d'entraînement incrémentales comprenant un ou plusieurs nouveaux fichiers de code G correspondant à des objets dangereux/illégaux non compris dans des données d'entraînement précédentes.

6. Appareil (100) selon l'une des revendications précédentes, dans lequel la circuiterie d'interface (102) est configurée pour recevoir une demande d'impression 3D de l'objet 3D (140) selon le fichier de code G (130), et dans lequel la restriction de l'impression 3D de l'objet 3D (140) par la circuiterie de traitement (104) comprend au moins l'un parmi :
l'exigence que l'impression 3D soit effectuée par l'intermédiaire d'un profil utilisateur ;
l'envoi et/ou le stockage d'une notification de la demande et/ou de l'instance d'impression 3D de l'objet 3D (140) associée au profil utilisateur ;
l'exécution d'une impression 3D d'une version modifiée de l'objet 3D (140), et
le blocage de la demande d'impression 3D de l'objet 3D (140).

7. Procédé (1000) pour imprimer des objets tridimensionnels, 3D, par une imprimante 3D en utilisant un réseau d'apprentissage automatique entraîné (106) basé sur un réseau neuronal convolutif basé sur l'attention, le procédé (1000) comprenant le fait de :
recevoir (1010) un fichier de code G (130) comprenant des instructions pour l'impression 3D d'un ou plusieurs objets 3D (140), le fichier de code G (130) spécifiant des coordonnées (132-1 ; 132-2) ;
classifier (1020) un objet 3D (140) représenté par le fichier de code G (130) sur la base de dimensions spatiales d'une caractéristique géométrique (142-1 ; 142-2) de l'objet 3D (140) correspondant aux coordonnées (132-1 ; 132-2),
sortir un signal de classification (134-1 ; 134-2) qui indique si l'objet 3D (140) représenté par le fichier de code G (130) est dangereux/illégal ou non, et
restreindre (1030) l'impression 3D de l'objet 3D (140) si l'objet 3D (140) est classifié comme au moins une partie d'un objet dangereux/illégal.

8. Procédé (1000) selon la revendication 7, dans lequel la classification (1020) comprend le fait d'utiliser un réseau d'apprentissage automatique (106) pour déterminer si l'objet 3D (140) représenté par le fichier de code G (130) est dangereux/illégal ou non et pour mapper le fichier de code G (130) à un type d'objet d'objets dangereux/illégaux s'il est déterminé que le fichier de code G (130) correspond à un objet 3D dangereux/illégal.

9. Procédé (1000) selon la revendication 8, comprenant en outre le fait d'entraîner le réseau d'apprentissage automatique (106) sur la base d'informations de vérité terrain comprenant des fichiers de code G (160-1) étiquetés représentant des objets dangereux et des fichiers de code G (160-2) étiquetés représentant des objets non dangereux.

10. Procédé (1000) selon la revendication 9, dans lequel l'entraînement du réseau d'apprentissage automatique (106) est basé sur des informations de vérité terrain comprenant des fichiers de code G (162-1) étiquetés et des modèles 3D (162-2) étiquetés, un fichier de code G (162-1) étiqueté étant indiqué comme correspondant à un modèle 3D étiqueté, et un groupe de coordonnées du fichier de code G (162-1) étiqueté étant indiqué comme correspondant à une caractéristique géométrique du modèle 3D (162-2).

11. Procédé (1000) selon la revendication 9 ou la revendication 10, dans lequel l'entraînement du réseau d'apprentissage automatique (106) est basé sur des informations de vérité terrain comprenant des fichiers de code G étiquetés (164-1 ; 164-2) indiquant être à l'intérieur ou à l'extérieur d'un degré prédéfini de similarité d'un fichier de code G déterminé pour correspondre à un objet 3D dangereux/illégal (160-1).

12. Procédé (1000) selon l'une des revendications 9 à 11, dans lequel les informations de vérité terrain comprennent des fichiers de code G authentiques et/ou synthétiques.
